Europäisches Patentamt

European Patent Office

Office européen des brevets

(19)

(11) **EP 0 650 297 B1**

(12) **FASCICULE DE BREVET EUROPEEN**

(45) Date de publication et mention
de la délivrance du brevet:
**07.01.1999 Bulletin 1999/01**

(51) Int Cl.⁶: **H04N 7/00**

(21) Numéro de dépôt: **95200019.8**

(22) Date de dépôt: **24.04.1989**

(54) **Système de transmission d'images utilisant un canal de transmission à bande passante relativement étroite**

Übertragungssystem für Bilder, das einen Übertragungskanal mit einer relativ schmalen Bandbreite verwendet

System for transmitting pictures using a transmission channel with a relatively narrow bandwidth

(84) Etats contractants désignés:
**DE FR GB**

(30) Priorité: **29.04.1988 FR 8805776**

(43) Date de publication de la demande:
**26.04.1995 Bulletin 1995/17**

(62) Numéro(s) de document de la (des) demande(s)
initiale(s) en application de l'article 76 CBE:
**89201059.6 / 0 340 843**

(73) Titulaires:
• **LABORATOIRES D'ELECTRONIQUE PHILIPS S.A.S.**
**94450 Limeil-Brévannes (FR)**
Etats contractants désignés:
**FR**
• **Koninklijke Philips Electronics N.V.**
**5621 BA Eindhoven (NL)**
Etats contractants désignés:
**DE GB**

(72) Inventeur: **Fonsalas, Frédéric**
**F-75008 Paris (FR)**

(74) Mandataire: **Chaffraix, Jean**
**Société Civile S.P.I.D.**
**156, Boulevard Haussmann**
**75008 Paris (FR)**

(56) Documents cités:
**EP-A- 0 160 547          EP-A- 0 181 215**
**GB-A- 2 110 046          GB-A- 2 195 216**
**US-A- 4 383 272**

• **PROCEEDINGS OF THE WORKSHOP ON MOTION: REPRESENTATION AND ANALYSIS, CHARLESTON, SOUTH CAROLINA, 7-9 MAI 1986, PAGES 119-124, IEEE, NEW YORK, US; H. SHARIAT ET AL. 'How to use more than two frames to estimate motion'**
• **SIGNAL PROCESSING OF HDTV, PROCEEDINGS OF THE SECOND INTERNATIONAL WORKSHOP ON SIGNAL PROCESSING OF HDTV, L'AQUILA, ITALY, 29 FEVRIER-2 MARS 1988, pages 337 - 344 VAN DER MEER ET AL. 'MOVEMENT PROCESSING FOR AN HD-MAC CODING SYSTEM'**
• **BRITISH BROADCASTING CORPORATION, RESEARCH DEPARTMENT, ENGINEERING DIVISION, BBC RD 1987/11, Septembre 1987, LONDRES, GB pages 1 - 20 G.A. THOMAS 'Television Motion Measurement for DATV and other Applications'**

EP 0 650 297 B1

## Description

La présente invention concerne un système de transmission d'images utilisant un canal de transmission à bande passante relativement étroite, système comportant :

d'une part, un dispositif émetteur pourvu :

- d'un organe de prises de vues prévu pour fournir des informations d'images complètes par unité de temps,
- d'un organe d'estimation de mouvement pour fournir des indications de mouvement à transmettre pour des blocs de points d'image,
- d'un organe de prélèvement pour fournir des images à transmettre en prélevant une image parmi N images complètes, N étant supérieur à 2, et en laissant N-1 images intermédiaires à restituer,
- d'un organe d'émission pour transmettre les images à transmettre et les indications de mouvement à transmettre,

d'autre part, au moins un dispositif récepteur pourvu :

- d'un organe récepteur pour fournir des images transmises et des indications de mouvements transmises à partir des images à transmettre et des indications de mouvements à transmettre,
- d'un organe d'interpolation pour restituer les N-1 images intermédiaires à partir des images transmises en tenant compte des indications de mouvement transmises.

On sait que la transmission des images implique une largeur de bande passante de canaux de transmission élevée. Cette largeur devient rapidement prohibitive lorsqu'on veut transmettre des images de bonne définition (télévision HDTV). On a constaté que, bien souvent, la variation du contenu d'une image à l'autre est bien moins élevée, en général, que la variation d'une zone à l'autre d'une même image, en d'autres termes, la corrélation temporelle est supérieure à la corrélation spatiale.

Pour pouvoir fournir de bonnes images intermédiaires, l'estimation de l'indication de mouvement doit être faite avec soin. Le document :
PROCEEDINGS Workshop on MOTION REPRESENTATION and ANALYSIS, 7-9 Mai 1986, Kiawah Island Resort, Charleston, South Carolina pages 119-123, propose aussi de tenir compte de plusieurs images pour effectuer cette estimation. Cette estimation de mouvement est établie sur la détermination de plusieurs coefficients définissant des rotations et des déplacements. Ces coefficients sont d'autant plus précis qu'on analyse plus d'images. Cette méthode implique que la nature des mouvements soit prévue et définissable par des équations. Elle est donc inefficace pour tous les mouvements non prévus. En outre, ce document ne mentionne pas la façon dont est faite l'interpolation et cette méthode implique quand même bien des calculs.

La présente invention propose un système du genre cité dans le préambule qui ne préjuge en rien de la nature des images à transmettre.

Pour cela, un tel système est remarquable en ce que l'organe d'estimation de mouvement comporte :

- des moyens d'affectation pour affecter, à chaque bloc d'une image intermédiaire disposée entre deux images transmises TT et TT+1 dites images d'encadrement, une double indication de mouvement VB et VF basée respectivement sur chacune de ces images d'encadrement, la double indication de mouvement étant affectée à chaque bloc pour transmission,

et en ce que l'organe d'interpolation est muni de moyens de calculs pour effectuer un calcul de luminance $I(x,\alpha)$ des points x appartenant aux images intermédiaires $\alpha$ par pondération des blocs appartenant aux images d'encadrement définis respectivement par les deux indications de mouvement.

La description suivante, accompagnée des dessins ci-annexés, le tout donné à titre d'exemple non limitatif, fera bien comprendre comment l'invention peut être réalisée.

La figure 1 est un schéma d'un système de transmission conforme à l'invention.

La figure 2 montre la transmission des images.

La figure 3 montre un premier exemple de réalisation du premier organe de prélèvement.

La figure 4 montre un organe de reconstruction coopérant avec l'organe de la figure 3.

La figure 5 montre la répartition dans le temps des images à interpoler.

La figure 6 montre l'exemple de réalisation préféré de l'organe de prélèvement.

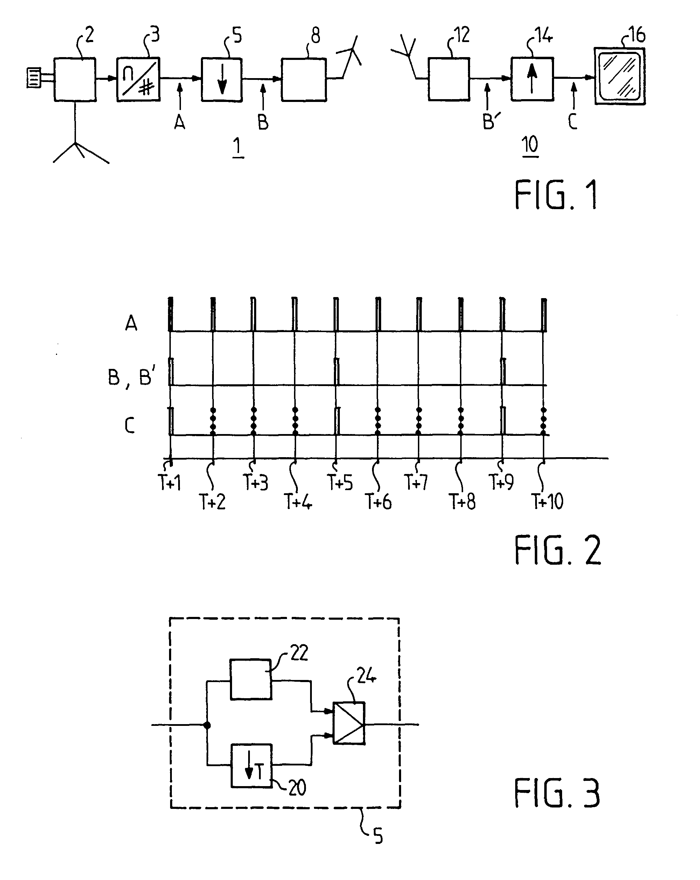

A la figure 1, la référence 1 indique un dispositif émetteur 1. Ce dispositif comporte une caméra de télévision 2 qui fournit des signaux analogiques. Ces signaux sont convertis en signaux numériques par un convertisseur analogique-numérique 3. Ces signaux numériques sont constitués par des échantillons numériques de 8 éléments binaires par exemple, de sorte que chaque échantillon représente un point d'image analysé par la caméra 2. Comme la caméra 2 est une caméra à haute définition, il n'est pas possible de transmettre tous ces échantillons par les canaux de bande passante usuelle, aussi a-t-on prévu un organe de prélèvement 5 qui n'en prélève qu'un certain nombre pour être transmis à l'aide de l'organe de transmission 8.

A la figure 1, la référence 10 indique un dispositif récepteur. Les échantillons transmis sont restitués à la sortie d'un organe de réception 12 et un organe de reconstruction 14 élabore les informations pour reconstituer les échantillons manquants pour qu'un organe de visualisation 16 puisse restituer une image de qualité aussi proche que possible de celle analysée par la caméra 2.

A la figure 2 on a représenté en A par des traits placés en des instants T, T+1, T+2, ..., T+10 l'apparition d'images fournies par la caméra 2 et considérées à la sortie du convertisseur 3.

L'organe de prélèvement 5 prélève les échantillons concernant une image sur N (dans l'exemple décrit N = 4) de sorte que seules les images apparaissant aux instants T+1, T+5, T+9 sont transmises, ce qui est montré sur la figure 2 à la ligne B,B'. Ces images transmises se retrouvent à l'entrée de l'organe de reconstruction 14 qui élabore les images intermédiaires à partir des images transmises, ce qui est représenté par des pointillés à la ligne C de la figure 2.

Les images intermédiaires peuvent être reconstituées en interpolant ou en répétant les images transmises. Cependant, il est préférable de reconstituer les images en tenant compte des déplacements des points de luminance d'une image à l'autre.

A la figure 3, on a représenté un organe de prélèvement 5 qui comporte un premier organe de prélèvement d'images proprement dit portant la référence 20 ; cet organe 20 fournit à sa sortie une image sur quatre parmi toutes les images élaborées par la caméra 2. D'autre part un organe d'estimation de mouvement 22 fournit pour des blocs de points d'images un vecteur déplacement affecté à chacun d'eux, de sorte qu'un multiplexeur d'information 24 fournit à sa sortie un multiplexage d'informations concernant la totalité des points d'une image et les vecteurs déplacements des blocs de points des images non transmises.

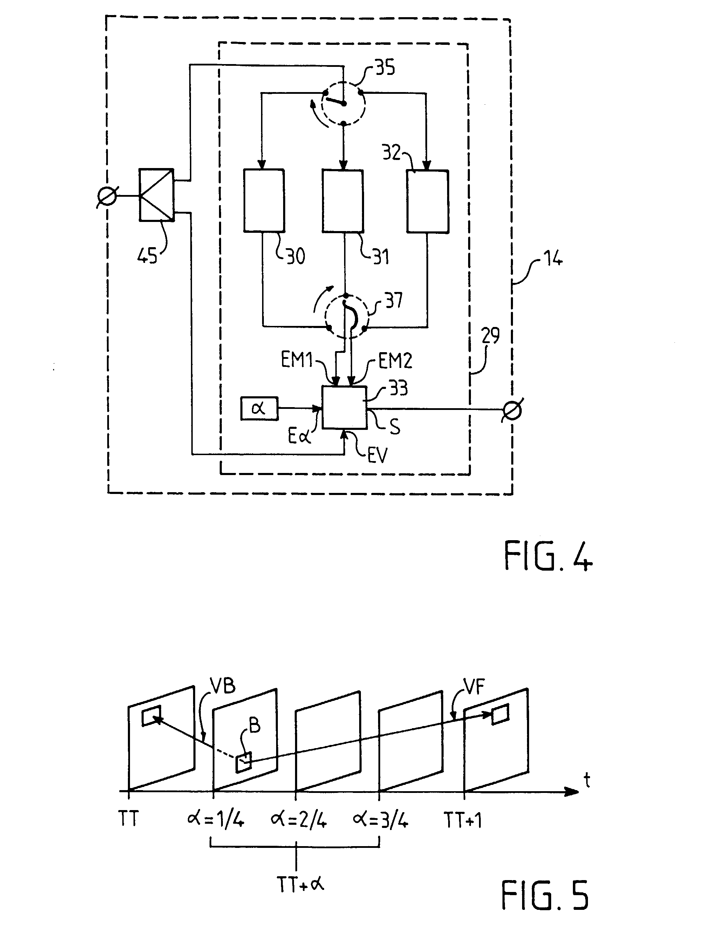

A la figure 4, on a représenté un organe de reconstruction 14 convenant à la figure 3. Cet organe est formé d'un ensemble de calcul d'images 29 constitué d'une part de trois mémoires 30, 31 et 32 dont chacune est prévue pour contenir une image et d'autre part d'un organe de calcul d'interpolation 33. Un commutateur rotatif 35 permet qu'une image soit enregistrée tour à tour dans chacune de ces mémoires. Un autre commutateur rotatif 37 permet la lecture de deux mémoires pour qu'une interpolation puisse s'effectuer au moyen de l'organe de calcul d'interpolation 33. Cet organe de calcul est muni de deux entrées EM1 et EM2 pour être raccordé aux sorties de deux mémoires sélectionnées par le commutateur 37, d'une entrée EV pour recevoir l'information de déplacement et d'une entrée Eα pour recevoir le numéro d'image à fournir à sa sortie S qui constitue la sortie de l'organe 14. L'information de déplacement et les informations d'images transmises proviennent d'un démultiplexeur 45 qui effectue le tri du flot d'informations amenées à son entrée.

Les organes de prélèvement 5 et de reconstruction 14 montrés aux figures 3 et 4 coopèrent de la façon suivante.

Tout d'abord, on se reporte à la figure 5 où on a représenté, en fonction du temps t, l'apparition de différentes images au niveau de l'organe de prise de vues.

Ces images surviennent respectivement aux temps ..., TT, TT+α, ..., TT+1, où α = 1/4, 2/4, 3/4. Seules les images survenant aux temps TT et TT+1 sont effectivement transmises et se comportent en images d'encadrement pour les images intermédiaires à restituer. L'organe d'estimation de mouvement 22 va déterminer, pour chaque image intermédiaire, c'est-à-dire celles survenant aux instants TT+α, une information de mouvement α, donnant donc la place de l'image à interpoler par rapport aux images transmises.

Selon l'invention, l'organe d'estimation 22 fournit pour chaque image intermédiaire à interpoler une grandeur de déplacement VB ou VF. Une de ces grandeurs est déterminée pour des blocs de points d'images d'une manière bien connue que l'on rappelle ci-dessous. Par exemple pour chaque image de 1152 lignes de 1440 points d'image ce qui correspond à un échantillonnage à 54 MHz des images haute définition, on forme des blocs de 16 segments de ligne dont chacun comporte 16 points. Un tel bloc est représenté à la figure 5 par la référence B. Pour déterminer la grandeur VB, on cherche un bloc dans l'image survenant à l'instant TT qui donne la meilleure corrélation avec le bloc B. Pour déterminer la grandeur VF, on cherche un bloc dans l'image survenant à l'instant TT+1 qui donne la meilleure corrélation avec ce même bloc B. L'organe de calcul d'interpolation effectue donc pour tout α = 1/4, 2/4, 3/4, le calcul suivant :

$$I(x, \alpha) = (1-\alpha).I(x + VB, TT) + \alpha.I(x + VF, TT+1) \qquad (1)$$

où I(m,n) est la luminance du point de coordonnées m considéré à l'instant n.

Il est facile maintenant de comprendre le fonctionnement de l'organe de reconstruction 14 :

-   Soit un instant t1 où les entrées EM1 et EM2 sont connectées aux sorties des mémoires 31 et 32 respectivement, tandis que la mémoire 30 s'enregistre. A cet instant t1 on admet que le contenu de la mémoire 32, contenant les informations de l'image complète de l'instant TT, est fourni à la sortie S,
-   à l'instant t1 + 1/4, c'est-à-dire lorsque α = 1/4, à la sortie S les données sont représentées par la formule (1) avec α = 1/4,
-   à l'instant t1 + 2/4, les données fournies sont aussi représentées par la formule (1) avec α = 2/4,
-   à l'instant t1 + 3/3, les données fournies sont aussi représentées par la formule (1) avec α = 3/4.
-   A un instant t2, les entrées EM1 et EM2 sont connectées respectivement aux sorties des mémoires 30 et 31 tandis que la mémoire 32 enregistre des données pour une nouvelle image,
-   et ainsi de suite.

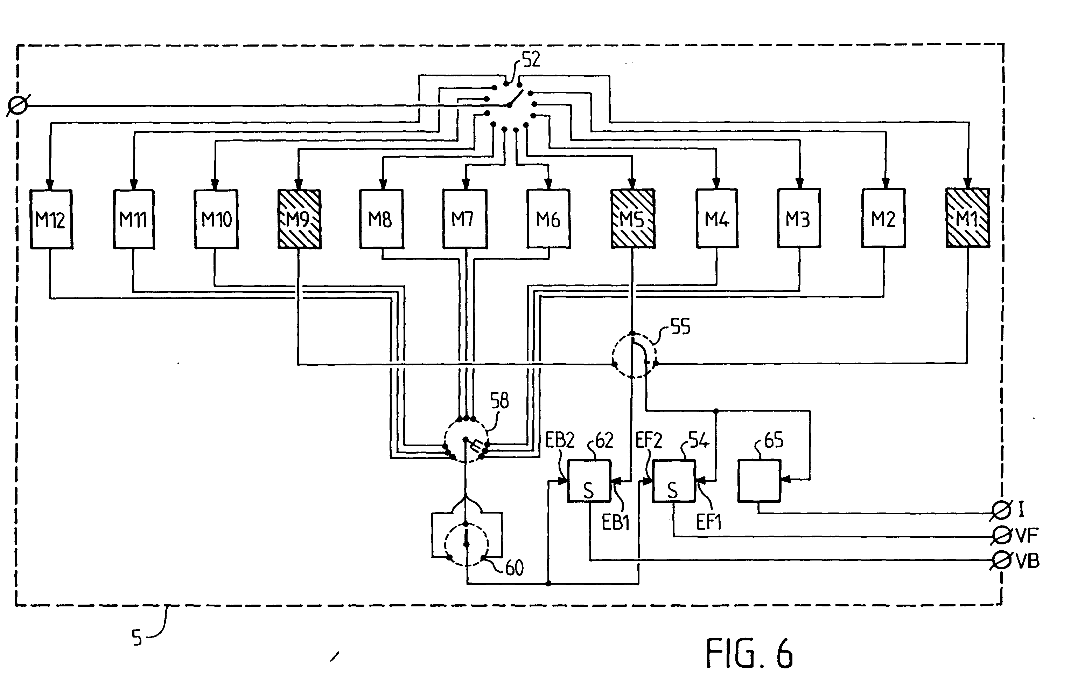

La figure 6 montre comment peut être réalisé l'organe de prélèvement 5.

Il se compose essentiellement de 12 mémoires M1 à M12 dont la capacité est suffisante pour enregistrer toute une image. On a hachuré les mémoires M1, M5 et M9 pour indiquer qu'elles contiennent les images destinées à être effectivement transmises. Un commutateur rotatif 52 met en relation tour à tour chacune de ces mémoires M1 à M12 avec l'organe de prise de vues 12.

Un organe de calcul de mouvement avant 54 pour fournir à sa sortie S l'information VF est muni d'une première entrée EF1 pour être connecté en sortie d'une mémoire M1, M5 et M9 par l'intermédiaire d'un commutateur rotatif double 55 et d'une deuxième entrée EF2 pour être connecté en sortie d'une mémoire M2, M3 ou M4 lorsque EF1 est connecté à la sortie de la mémoire M1 ou en sortie de la mémoire M6, M7 ou M8 lorsque EF2 est connecté à la sortie de la mémoire M5 ou bien encore en sortie de mémoire M10, M11 et M12 lorsque EF1 est connecté à la sortie de la mémoire M9. La connexion de l'entrée EF2 aux sorties des mémoires M2, M3, M4, M6, M7, M8, M10, M11, M12 s'effectue au moyen d'un premier commutateur rotatif triple 58 et d'un deuxième commutateur simple 20. Les commutateurs 55 et 58 sont manoeuvrés en même temps tandis que le commutateur 60 est manoeuvré au rythme de transmission des informations de déplacement pour les images non transmises.

Un organe de calcul de mouvement arrière 62 pour fournir à sa sortie S les informations VB est muni d'une première entrée EB1 pour être connecté en sortie d'une mémoire M1, M5 et M9 par l'intermédiaire du deuxième contact du commutateur 55 et d'une deuxième entrée EB2 pour être connecté tout comme la deuxième entrée EF2 aux sorties des mémoires M2, M3, M4, M6, M7, M8, M10, M11 et M12.

Le fonctionnement d'un tel organe 5 est le suivant.

- Soit un instant t10. Les entrées EF1 et EB1 sont connectées aux sorties des mémoires M1 et M5 respectivement ; à cet instant, on transmet tout le contenu de la mémoire M1.
- Puis à l'instant t10 + 1/4 on élabore les informations VB et VF en comparant les contenus des mémoires M2 et M1 d'une part et M2 et M5 d'autre part.
- A l'instant t10 + 2/4 on élabore les informations VB et VF en comparant les contenus des mémoires M3 et M1 d'une part et M3 et M5 d'autre part.
- A l'instant t10 + 3/4 on élabore les informations VB et VF en comparant les contenus des mémoires M4 et M1 d'une part et M4 et M5 d'autre part.
- Puis à l'instant t11 les commutateurs 55 et 58 changent de position. C'est au tour du contenu de la mémoire M5 d'être transmis. Puis aux instants t11 + 1/4, t11 + 2/4, t11 + 3/4 on élabore les informations VB et VF des images non transmises et à l'instant t12 on transmet le contenu de la mémoire M9.

Tout ceci se reproduit d'une manière cyclique pour toutes les mémoires. Il va de soi que lorsque les mémoires M1, M2, M3, M4 et M5 sont impliquées par un processus d'émission et/ou de calcul des informations VB et VF, les mémoires M6, M7, M8 et M9 sont impliquées dans un processus d'enregistrement et que lorsque les mémoires M5, M6, M7, M8, M9 sont impliquées dans un processus d'émission et/ou de calcul d'informations VB et VF, les mémoires M10, M11, M12 et M1 sont impliquées dans un processus d'enregistrement et enfin, lorsque les mémoires M9, M10, M11, M12 et M1 sont impliquées dans un processus d'émission et/ou de calcul de VB et VF, les mémoires M2, M3, M4 et M5 le sont dans un processus d'enregistrement.

## Revendications

1. Système de transmission d'images utilisant un canal de transmission à bande passante relativement étroite, système comportant :
   d'une part, un dispositif émetteur (1) pourvu :

   - d'un organe de prises de vues (2) prévu pour fournir des informations d'images complètes par unité de temps,
   - d'un organe d'estimation de mouvement (22) pour fournir des indications de mouvement à transmettre pour des blocs de points d'image,
   - d'un organe de prélèvement (5) pour fournir des images à transmettre en prélevant une image parmi N images complètes, N étant supérieur à 2, et en laissant N-1 images intermédiaires à restituer,
   - d'un organe d'émission (8) pour transmettre les images à transmettre et les indications de mouvement à transmettre,

   d'autre part, au moins un dispositif récepteur (10) pourvu :

   - d'un organe récepteur pour fournir des images transmises et des indications de mouvements transmises à partir des images à transmettre et des indications de mouvements à transmettre,
   - d'un organe d'interpolation (33) pour restituer les N-1 images intermédiaires à partir des images transmises en tenant compte des indications de mouvement transmises,

   l'organe d'estimation de mouvement comportant

   - des moyens d'affectation pour affecter, à chaque bloc d'une image intermédiaire disposée entre deux images transmises TT et TT+1 dites images d'encadrement, une double indication de mouvement VB et VF basée respectivement sur chacune de ces images d'encadrement, caractérisé en ce que la double indication de mouvement est affectée à chaque bloc pour transmission,

et en ce que l'organe d'interpolation est muni de moyens de calculs pour effectuer un calcul de luminance I(x,α) des points x appartenant aux images intermédiaires α par pondération des blocs appartenant aux images d'encadrement définis respectivement par les deux indications de mouvement.

2. Système de transmission d'images selon la revendication 1 caractérisé en ce que les moyens de calcul effectuent :

$$I(x,\alpha) = (1-\alpha).I(x+VB,TT) + \alpha I(x+VF,TT+1)$$

où α (0 ≤ α ≤ 1) donne l'emplacement de l'image intermédiaire entre TT et TT+1 qui sont les images d'encadrement et x les points de l'image intermédiaire.

3. Dispositif récepteur convenant à un système de transmission selon la revendication 1 ou 2 comportant :

- un organe récepteur pour fournir des images transmises et des indications de mouvements transmises à partir des images à transmettre et des indications de mouvements à transmettre,
- un organe d'interpolation (33) pour restituer les N-1 images intermédiaires à partir des images transmises en tenant compte des indications de mouvement transmises,

caractérisé en ce que :
l'organe d'estimation de mouvement comporte :

- des moyens d'affectation pour affecter, à chaque bloc d'une image intermédiaire disposée entre deux images transmises TT et TT+1 dites images d'encadrement, une double indication de mouvement VB et VF basée respectivement sur chacune de ces images d'encadrement,

et en ce que l'organe d'interpolation est muni de moyens de calculs pour effectuer un calcul de luminance I(x,α) des points x appartenant aux images intermédiaires α par pondération des blocs appartenant aux images d'encadrement définis respectivement par les deux indications de mouvement.

4. Dispositif récepteur selon la revendication 3 caractérisé en ce que les moyens de calcul effectuent :

$$I(x,\alpha) = (1-\alpha).I(x+VB,TT) + \alpha I(x+VF,TT+1)$$

où α (0 ≤ α ≤ 1) donne l'emplacement de l'image intermédiaire entre TT et TT+1 qui sont les images d'encadrement et x les points de l'image intermédiaire.

5. Procédé pour transmettre des images comprenant les étapes suivantes :
d'une part, pour former des informations d'images à transmettre constituées par des images à transmettre et des indications de mouvement établies sur des images complètes :

- une estimation de mouvement pour fournir des indications de mouvement sur des blocs de points d'image complètes,
- un prélèvement pour fournir des images à transmettre en prélevant une image parmi N images complètes, N étant supérieur à 2, et en laissant N-1 images intermédiaires à restituer,

d'autre part, pour restituer les images,

- une réception pour fournir des images transmises et des indications de mouvements transmises à partir des images à transmettre et des indications de mouvements à transmettre,
- une interpolation pour restituer les N-1 images intermédiaires à partir des images transmises en tenant compte des indications de mouvement transmises,

l'estimation de mouvement comportant des étapes pour :

- affecter, à chaque bloc d'une image intermédiaire disposée entre deux images transmises TT et TT+1 dites images d'encadrement, une double indication de mouvement VB et VF basée respectivement sur chacune de ces images d'encadrement, caractérisé en ce que : la double indication de mouvement est affectée à chaque bloc pour transmission,

et en ce que l'interpolation comporte au moins une étape de calcul de luminance I(x,α) des points x appartenant aux images intermédiaires α par pondération des blocs appartenant aux images d'encadrement définis respectivement par les deux indications de mouvement.

6. Procédé pour transmettre des images selon la revendication 5 caractérisé en ce que les moyens de calcul effectuent :

$$I(x,\alpha) = (1-\alpha).I(x+VB,TT) + \alpha I(x+VF,TT+1)$$

où α (0 ≤ α ≤ 1) donne l'emplacement de l'image intermédiaire entre TT et TT+1 qui sont les images d'encadrement et x les points des images intermédiaires.

## Patentansprüche

1. Übertragungssystem für Bilder, das einen Übertragungskanal mit einer relativ schmalen Bandbreite verwendet, wobei das System beinhaltet :
   einerseits eine Sendevorrichtung (1), versehen mit :

   - einem Aufnahmeelement (2), um pro Zeiteinheit vollständige Bildinformationen zu liefern,
   - einem Bewegungs-Bewertungselement (22), um für Bildpunktblöcke zu übertragende Bewegungsangaben zu liefern, unter Verwendung vollständiger Bildfolgen,
   - einem Entnahmeelement (5), um zu übertragende Bilder zu liefern, durch Entnahme eines Bildes unter N vollständigen Bildern, wobei N größer als 2, und durch Belassen von N-1 wiederherzustellender Zwischenbilder,
   - einem Sendeelement (8) zum Übertragen der zu übertragenden Bilder und der zu übertragenden Bewegungsangaben,

   und andererseits mindestens eine Empfangsvorrichtung (10), versehen mit :

   - einem Empfangselement, um die ausgehend von den zu übertragenden Bilder und den zu übertragenden Bewegungsangaben übertragenen Bilder und übertragenen Bewegungsangaben zu liefern,
   - einem Interpolationselement (33), um die N-1 Zwischenbilder ausgehend von den übertragenen Bildern unter Berücksichtigung der übertragenen Bewegungsangaben wiederherzustellen,

   wobei das Bewegungs-Bewertungselement Folgendes beinhaltet :

   - Zuteilungsmittel, um jedem Zwischenbildblock zwischen zwei übertragenen Bildern TT und TT + 1, die als Rahmenbilder bezeichnet werden, eine doppelte Bewegungsanzeige VB und VF zuzuteilen, und zwar auf Basis jedes dieser Rahmenbilder, dadurch gekennzeichnet, daß die doppelte Bewegungsanzeige zum Übertragen jedem Block zugeteilt wird, und daß das Interpolationselement mit Rechenmitteln versehen ist zum Durchführen einer Berechnung der Leuchtdichte I(x,a) der Punkte x, die in den Zwischenbildern $\alpha$ erscheinen durch Gewichtung der Blöcke, die in den Rahmenbildern erscheinen, die jeweils durch die zwei Bewegungsangaben definiert werden.

2. Übertragungssystem für Bilder nach Anspruch 1, dadurch gekennzeichnet, daß die Berechnungsmittel Folgendes berechnen

$$I(x,\alpha) = (1-\alpha).I(x + VB,TT) + \alpha.I(x + VF,TT+1)$$

   wobei $\alpha$ $(0 \le \alpha \le 1)$ die Positionierung des Zwischenbildes zwischen TT und TT + 1 gibt, welche die Rahmenbilder sind und wobei x die Punkte des Zwischenbildes sind.

3. Empfangsvorrichtung geeignet für ein Übertragungssystem nach Anspruch 1 oder 2, wobei diese Vorrichtung die nachfolgenden Elemente aufweist:

   - ein Empfangselement zum Liefern der übertragenen Bilder und der übertragenen Bewegungsangaben, ausgehend von zu übertragenden Bildern und von zu übertragenden Bewegungsangaben,
   - ein Interpolationselement (33) zum Wiederherstellen der N-1 Zwischenbilder ausgehend von Übertragenen Bildern, wobei die übertragenen Bewegungsangaben berücksichtigt werden,

   dadurch gekennzeichnet, daß
   das Bewegungsschätzungselement die nachfolgenden Elemente aufweist:

   - Zuteilungsmittel, um jedem Zwischenbildblock zwischen zwei übertragenen Bildern TT und TT+1, die als Rahmenbilder bezeichnet werden, eine doppelte Bewegungsanzeige VB und VF zuzuteilen, und zwar auf Basis jedes dieser Rahmenbilder, dadurch gekennzeichnet, daß die doppelte Bewegungsanzeige zum Übertragen jedem Block zugeteilt wird, und daß

   das Interpolationselement mit Rechenmitteln versehen ist zum Durchführen einer Berechnung der Leuchtdichte I(x,a) der Punkte x, die in den Zwischenbildern $\alpha$ erscheinen durch Gewichtung der Blöcke, die in den Rahmenbildern erscheinen, die jeweils durch die zwei Bewegungsangaben definiert werden.

4. Empfangsvorrichtung nach Anspruch 3, dadurch gekennzeichnet, daß die Berechnungsmittel Folgendes berechnen:

$$I(x,\alpha) = (1-\alpha).I(x + VB,TT) + \alpha.I(x + VF,TT+1)$$

   wobei $\alpha$ $(0 \le \alpha \le 1)$ die Positionierung des Zwischenbildes zwischen TT und TT + 1 gibt, welche die Rahmenbilder sind und wobei x die Punkte des Zwischenbildes sind.

5. Verfahren zum Übertragen von Bildern, wobei dieses Verfahren die nachfolgenden Vefahrensschritte aufweist:
einerseits zur Bildung der zu übertragenden Bildinformationen, gebildet aus den zu überragenden Bildern und den anhand vollständiger Bilder aufgestellten Bewegungsangaben :

- eine Bewegungsbewertung, um Bewegungsangaben für vollständige Bildpunktblöcke zu liefern,
- eine Entnahme, um zu übertragende Bilder zu liefern, durch Entnahme eines Bildes unter N vollständigen Bildern, wobei N größer als 2, und durch Belassen von N-1 wiederherzustellender Zwischenbilder

andererseits, um die Bilder wiederherzustellen.

- einen Empfang, um die ausgehend von den zu übertragenden Bildern und den zu übertragenden Bewegungsangaben übertragenen Bilder und übertragenen Bewegungsanaben zu liefern,
- eine Interpolation, um die N-1 Zwischenbilder ausgehend von den übertragenen Bildern unter Berücksichtigung der übertragenen Bewegungsangaben wiederherzustellen, wobei die Bewegungsbewertung die nachfolgenden Etappen aufweist :

- Zuteilung, um jedem Zwischenbildblock zwischen zwei übertragenen Bildern TT und TT+1, die als Rahmenbilder bezeichnet werden, eine doppelte Bewegungsanzeige VB und VF zuzuteilen, und zwar auf Basis jedes dieser Rahmenbilder, dadurch gekennzeichnet, daß die doppelte Bewegungsanzeige zum Übertragen jedem Block zugeteilt wird, und daß

die Interpolation eine Berechnungsetappe aufweist zum Durchführen einer Berechnung der Leuchtdichte $I(x,a)$ der Punkte x, die in den Zwischenbildern $\alpha$ erscheinen durch Gewichtung der Blöcke, die in den Rahmenbildern erscheinen, die jeweils durch die zwei Bewegungsangaben definiert werden.

6. Verfahren zum Übertragen von Bildern nach Anspruch 5, dadurch gekennzeichnet, daß die Berechnungsmittel Folgendes Berechnen:

$$I(x,\alpha) = (1-\alpha).I(x + VB,TT) + \alpha.I(x + VF,TT+1)$$

wobei $\alpha$ $(0 \le \alpha \le 1)$ die Positionierung des Zwischenbildes zwischen TT und TT + 1 gibt, welche die Rahmenbilder sind und wobei x die Punkte des Zwischenbildes sind.

**Claims**

1. A system for transmitting pictures using a transmission channel having a relatively narrow passband, said system comprising:
a transmitter (1) provided with:

- a pick-up member (2) for supplying complete picture information in units of time,
- a motion estimation member (22) for supplying motion indications to be transmitted for blocks of pixels,
- a sampling member (5) for supplying pictures to be transmitted by sampling one picture among N complete pictures, N being higher than 2, and leaving N-1 intermediate pictures to be restored,
- a transmission member (8) for transmitting the pictures to be transmitted and the motion indications to be transmitted,

at least one receiver (10) provided with:

- a receiver member for supplying transmitted pictures and transmitted motion indications on the basis of pictures to be transmitted and motion indications to be transmitted,
- an interpolation member (33) for restoring the N-1 intermediate pictures on the basis of transmitted pictures while taking transmitted motion indications into account, the motion estimation member comprising:
- assignment means for assigning, to each block of an intermediate picture situated between two transmitted pictures TT and TT+1 referred to as framing pictures, a double motion indication VB and VF based, respectively, on each of these framing pictures, characterized in that the double motion indication is assigned to each block for transmission,

and in that the interpolation member is provided with computing means for computing the luminance $I(x,\alpha)$ of pixels x associated with the intermediate pictures $\alpha$ by weighting of the blocks associated with the framing pictures defined, respectively, by the two motion indications.

2. A system for transmitting pictures as claimed in claim 1, characterized in that the computing means compute:

$$I(x, \alpha) = (1-\alpha).I(x + VB, TT) + \alpha.I(x + VF, TT+1)$$

wherein $\alpha$ ($0 \leq \alpha \leq 1$) defines the placement of the intermediate picture between TT and TT+1 which are the framing pictures and x defines the pixels of the intermediate picture.

3. A receiver conforming to a transmission system as claimed in claim 1 or 2, comprising:

- a receiver member for supplying transmitted pictures and transmitted motion indications on the basis of pictures to be transmitted and motion indications to be transmitted,
- an interpolation member (33) for restoring the N-1 intermediate pictures on the basis of transmitted pictures while taking transmitted motion indications into account,

characterized in that
the motion estimation member comprises:

- assignment means for assigning, to each block of an intermediate picture situated between two transmitted pictures TT and TT+1 referred to as framing pictures, a double motion indication VB and VF based, respectively, on each of these framing pictures,

and in that the interpolation member is provided with computing means for computing the luminance $I(x, \alpha)$ of pixels x associated with the intermediate pictures $\alpha$ by weighting of the blocks associated with the framing pictures defined, respectively, by the two motion indications.

4. A receiver as claimed in claim 3, characterized in that the computing means compute:

$$I(x, \alpha) = (1-\alpha).I(x + VB, TT) + \alpha.I(x + VF, TT+1)$$

wherein $\alpha$ ($0 \leq \alpha \leq 1$) defines the placement of the intermediate picture between TT and TT +1 which are the framing pictures and x defines the pixels of the intermediate picture.

5. A method of transmitting pictures, comprising the following steps: for forming information components of pictures to be transmitted constituted by pictures to be transmitted and motion indications established from complete pictures:

- a motion estimation step for supplying motion indications on complete blocks of pixels,
- a sampling step for supplying pictures to be transmitted by sampling one picture among N complete pictures, N being higher than 2, and leaving N-1 intermediate pictures to be restored,

and, for restoring the pictures,

- a receiving step for supplying transmitted pictures and transmitted motion indications on the basis of pictures to be transmitted and motion indications to be transmitted,
- an interpolation step for restoring the N-1 intermediate pictures on the basis of transmitted pictures while taking transmitted motion indications into account,
- the motion estimation comprising steps for:

  - assigning, to each block of an intermediate picture situated between two transmitted pictures TT and TT+1 referred to as framing pictures, a double motion indication VB and VF based, respectively, on each of these framing pictures, characterized in that the double motion indication is assigned to each block for transmission,

and in that the interpolation comprises at least a step of computing the luminance $I(x, \alpha)$ of pixels x associated with the intermediate pictures $\alpha$ by weighting of the blocks associated with the framing pictures defined, respectively, by the two motion indications.

6. A method of transmitting pictures as claimed in claim 5, characterized in that the computing means compute:

$$I(x, \alpha) = (1-\alpha).I(x + VB, TT) + \alpha.I(x + VF, TT+1)$$

wherein $\alpha$ ($0 \leq \alpha \leq 1$) defines the placement of the intermediate picture between TT and TT+1 which are the framing pictures and x defines the pixels of the intermediate picture.

FIG. 1

FIG. 2

FIG. 3

9

FIG. 4

FIG. 5

FIG. 6